# EUROPÄISCHE PATENTSCHRIFT

(11) **EP 1 903 292 B1**
(45) Veröffentlichungstag und Bekanntmachung des Hinweises auf die Patenterteilung: **16.11.2011**
(21) Anmeldenummer: 07016338.1
(22) Anmeldetag: 21.08.2007
(51) Int. Cl.: F27B 7/16, F27B 7/22, C01B 31/08

(54) **Drehrohrofen für die Aktivkohleherstellung mit veränderter Drehrohrgeometrie**
Rotary furnace for manufacturing active carbon using modified rotary pipe geometry
Four rotatif pour la préparation de charbon actif doté d'une géométrie rotative modifiée

(30) Priorität: 19.09.2006 DE 102006044634; 07.11.2006 DE 102006052377
(43) Veröffentlichungstag der Anmeldung: 26.03.2008
(73) Patentinhaber: Blücher GmbH, 40699 Erkrath (DE)
(72) Erfinder: Böhringer, Bertram, Dr., 42115 Wuppertal (DE); Giebelhausen, Jann-Michael, 14712 Rathenow (DE); Fichtner, Sven, 14776 Brandenburg (DE)
(74) Vertreter: Gesthuysen, von Rohr & Eggert

(56) Entgegenhaltungen:
- EP-A- 1 614 987
- DE-A1- 2 325 781
- DE-C- 423 492
- DE-U1-202005 014 318
- US-A- 2 939 693

## Beschreibung

Die vorliegende Erfindung betrifft ein Drehrohr, insbesondere für einen Drehrohrofen zur Herstellung von Aktivkohle, nach dem Oberbegriff von Anspruch 1 sowie einen Drehrohrofen mit einem solchen Drehrohr. Des weiteren betrifft die vorliegende Erfindung ein **Verfahren zur Herstellung von Aktivkohle unter** Verwendung dieses Drehrohres bzw. Drehrohrofens.

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt, führen zu einem steigenden Bedarf an Aktivkohle.

Dabei wird die Aktivkohle zunehmend sowohl im zivilen wie auch im militärischen Bereich angewendet. Im zivilen Bereich kommt die Aktivkohle beispielsweise für die Aufreinigung von Gasen, Filteranlagen für die Klimatisation, Autofiltern etc. zur Anwendung, während im militärischen Bereich die Aktivkohle Verwendung in Schutzmaterialien aller Art findet (z. B. Atemschutzmasken, Schutzabdeckungen und Schutzbekleidungsstücken aller Art, wie z. B. Schutzanzügen etc.).

Aktivkohle wird im allgemeinen durch Carbonisierung (synonym auch als Schwelung, Pyrolyse oder Verkokung bezeichnet) und nachfolgende Aktivierung geeigneter kohlenstoffhaltiger Ausgangsmaterialien erhalten. Dabei werden solche Ausgangsmaterialien bevorzugt, die zu ökonomisch vernünftigen Ausbeuten führen. Denn die Gewichtsverluste durch Abspalten flüchtiger Bestandteile bei der Carbonisierung und durch den Abbrand beim Aktivieren sind erheblich. Für weitere Einzelheiten zur Herstellung von Aktivkohle kann beispielsweise verwiesen werden auf H. v. Kienle und E. Bäder, Aktivkohle und ihre industrielle Anwendung, Enke Verlag Stuttgart, 1980.

Die Beschaffenheit der erzeugten Aktivkohle - fein- oder grobporig, fest oder brüchig etc. - hängt vom kohlenstoffhaltigen Ausgangsmaterial ab. Übliche Ausgangsmaterialien sind beispielsweise Kokosnußschalen, Holzabfälle, Torf, Steinkohle, Peche, aber auch besondere Kunststoffe, wie z. B. sulfonierte Polymere, die unter anderem bei der Herstellung von Aktivkohle in Form von Körnchen oder Kügelchen eine große Rolle spielen.

Aktivkohle wird in verschiedenen Formen verwendet: Pulverkohle, Splitterkohle, Kornkohle, Formkohle und seit Ende der 1970er Jahre auch korn- und kugelförmige Aktivkohle (sogenannte "Kornkohle" bzw. "Kugelkohle"). Kornförmige, insbesondere kugelförmige Aktivkohle hat gegenüber anderen Formen von Aktivkohle wie Pulver-, Splitterkohle und dergleichen eine Reihe von Vorteilen, die sie für bestimmte Applikationen wertvoll oder sogar unverzichtbar macht: Sie ist rieselfähig, enorm abriebfest und staubfrei und sehr hart. Kornkohle, insbesondere Kugelkohle, ist wegen ihrer speziellen Form, aber auch wegen der extrem hohen Abriebfestigkeit für besondere Einsatzgebiete, so z. B. Flächenfiltermaterialien für Schutzanzüge gegen chemische Gifte oder Filter für niedrige Schadstoffkonzentrationen in großen Luftmengen, sehr gefragt.

Bei der Herstellung von Aktivkohle, insbesondere Kornkohle und Kugelkohle, wird in den meisten Fällen von geeigneten Polymeren ausgegangen. Bevorzugt kommen sulfonierte Polymere, insbesondere sulfonierte divinylbenzolvemetze Styrolpolymere, zum Einsatz, wobei die Sulfonierung auch in situ in Gegenwart von Schwefelsäure bzw. Oleum erreicht werden kann. Als geeignetes Ausgangsmaterial dienen z. B. Ionenaustauscherharze bzw. deren Vorstufen, bei denen es sich zumeist um divinylbenzolvernetzte Polystyrolharze handelt, wobei im Falle der fertigen Ionenaustauscher die Sulfonsäuregruppen bereits im Material vorhanden sind und im Falle der Ionenaustauschervorstufen noch durch Sulfonierung eingeführt werden müssen. Die Sulfonsäuregruppen spielen eine entscheidende Funktion, da ihnen die Rolle eines Vernetzers zukommen, indem sie bei der Carbonisierung abgespalten werden. Nachteilig und problematisch sind aber insbesondere die großen Mengen an freigesetzten Schwefeldioxid sowie die damit unter anderem verbundenen Korrosionsprobleme in den Herstellapparaturen.

Üblicherweise erfolgt die Herstellung von Aktivkohle in Drehrohröfen. Diese weisen beispielsweise eine Eintragsstelle für die Rohstoffbestickung am Ofenanfang und eine Austragsstelle für das Endprodukt am Ofenende auf.

Bei den herkömmlichen Prozessen zur Herstellung von Aktivkohle nach dem Stand der Technik werden bei der diskontinuierlichen Herstellung sowohl die Carbonisierung als auch die nachfolgende Aktivierung in einem einzigen Drehrohr durchgeführt.

Bei der Carbonisierung, welcher einer Phase der Vorcarbonisierung bzw. Vorschwelung vorangehen kann, erfolgt die Umwandlung des kohlenstoffhaltigen Ausgangsmaterials zu Kohlenstoff, d. h. mit anderen Worten wird das Ausgangsmaterial verkohlt. Bei der Carbonisierung der zuvor genannten organischen Polymere auf Basis von Styrol und Divinylbenzol, die vernetzende funktionelle chemische Gruppen, welche bei ihrer thermischen Zersetzung zu freien Radikalen und somit zu Vernetzungen führen, insbesondere Sulfonsäuregruppen, enthalten, werden - unter Abspaltung flüchtiger Bestandteile, wie insbesondere SO₂- die funktionellen chemischen Gruppen, insbesondere Sulfonsäuregruppen, zerstört, und es bilden sich freie Radikale, die eine starke Vernetzung bewirken - ohne die es keinen Pyrolyserückstand (=Kohlenstoff) gäbe. Geeignete Ausgangspolymere der vorgenannten Art sind insbesondere Ionenaustauscherharze (z. B. Kationenaustauscherharze bzw. saure Ionenaustauscherharze, vorzugsweise mit Sulfonsäuregruppen, so z. B. Kationenaustauscherharze auf Basis sulfonierter Styrol/Divinylbenzol-Copolymere) bzw. deren Vorstufen (d. h. die unsulfonierten Ionenaustauscherharze, welche vor oder bei der Carbonisierung noch mit einem geeigneten Sulfonierungsmittel, wie z. B. Schwefelsäure und/oder Oleum, sulfoniert werden müssen). Im allgemeinen wird die Pyrolyse unter inerter Atmosphäre (z. B. Stickstoff) oder allenfalls leicht oxidierender Atmosphäre durchgeführt. Gleichermaßen kann es vorteilhaft sein, während der Carbonisierung, insbesondere bei höheren Temperaturen (z. B. im Bereich von etwa 500 °C bis 650 °C), zu der Inertatmosphäre eine kleinere Menge an Sauerstoff, insbesondere in Form von Luft (z. B. 1 bis 5 %), zuzugeben, um eine Oxidation des carbonisierten Polymerskeletts zu bewirken und auf diese Weise die nachfolgende Aktivierung zu erleichtern.

Der Carbonisierung schließt sich dann die Aktivierung des carbonisierten Ausgangsmaterials an. Das Grundprinzip der Aktivierung besteht darin, einen Teil des bei der Schwelung generierten Kohlenstoffs selektiv und gezielt unter geeigneten Bedingungen abzubauen. Hierdurch entstehen zahlreiche Poren, Spalten und Risse, und die auf die Masseneinheit bezogene Oberfläche der Aktivkohle nimmt erheblich zu. Bei der Aktivierung wird also ein gezielter Abbrand der Kohle vorgenommen. Da bei der Aktivierung Kohlenstoff abgebaut wird, tritt bei diesem Vorgang ein zum Teil erheblicher Substanzverlust ein, welcher unter optimalen Bedingungen gleichbedeutend mit einer Erhöhung der Porosität ist und eine Zunahme der inneren Oberfläche (Porenvolumen) der Aktivkohle bedeutet. Die Aktivierung erfolgt daher unter selektiv bzw. kontrolliert oxidierenden Bedingungen. Übliche Aktivierungsgase sind im allgemeinen Sauerstoff, insbesondere in Form von Luft, Wasserdampf und/oder Kohlendioxid sowie Gemischen diese Aktivierungsgase. Den Aktivierungsgasen können gegebenenfalls Inertgase (z. B. Stickstoff) zusesetzt werden. Um eine technisch ausreichend hohe Reaktionsgeschwindigkeit zu erzielen, wird die Aktivierung im allgemeinen bei relativ hohen Temperaturen durchgeführt, insbesondere im Temperaturbereich von 700 °C bis 1.200 °C, vorzugsweise 800 °C bis 1.100 °C. Dies stellt hohe Anforderungen an die Temperaturbeständigkeit des Drohrohrofenmaterials.

Im Rahmen der Herstellung von Aktivkohle in Drehrohröfen ist es zudem erforderlich, daß mit der Carbonisierung und der Aktivierung eine gute Durchmischung des kohlenstoffhaltigen bzw. carbonisierten Ausgangsmaterials im Drehrohr erfolgt. Denn durch eine gute Durchmischung des Ausgangsmaterials wird gewährleistet, daß beispielsweise die während der Carbonisierung abgespaltenen sauren Reaktionsprodukte gleichmäßig und effektiv von dem kohlenstoffhaltigen Ausgangsmaterial abgeführt werden können. Auch bei dem Verfahrensschritt der Aktivierung ist eine gute Durchmischung des carbonisierten Ausgangsmaterials wünschenswert, da vor dem Hintergrund der Herstellung eines homogenen Aktivkohlematerials ein gleichmäßiger Kontakt des carbonisierten Ausgangsmaterials mit den Aktivierungsgasen wünschenswert ist. Somit kann eine gute Durchmischung des Ausgangsmaterials im Rahmen der Aktivkohleherstellung in Drehrohröfen einen wichtigen Beitrag zum Erhalt eines homogenen und leistungsfähigen Aktivkohleproduktes leisten.

Eine gute Durchmischung des Ausgangsmaterials, wie sie insbesondere durch eine axiale Durchmischung - also eine Durch- bzw. Vermischung entlang der Längsachse des Drehrohres - gewährleistet wird, wird jedoch von herkömmlichen Drehrohren des Standes der Technik nicht immer in ausreichendem Maße gewährleistet. Insbesondere weisen derartige Drehrohre des Standes der Technik keine gute axiale Durchmischung des Ausgangsmaterials auf. Dieser gravierende Nachteil der Drehrohre des Standes der Technik ist ursächlich auch darauf zurückzuführen, daß derartige Drehrohre einen konstanten Innendurchmesser aufweisen und die Drehrohre somit lediglich zylinderförmig ausgebildet sind. Die in den Drehrohren des Standes der Technik mitunter vorgesehenen, im Innenraum der Drehrohre angeordneten Mischelemente können in diesem Zusammenhang, insbesondere aufgrund ihrer begrenzten Dimensionen, einhergehend mit ihrer Anordnung innerhalb des zylinderförmigen Rohres, keinen wesentlichen Beitrag hinsichtlich der Gewährleistung einer nachhaltigen axialen Vermischung des Ausgangsmaterials bzw. Beladungsgutes leisten. Eine konkrete Abstimmung zwischen Drehrohrgeometrie einerseits und Anordnung bzw. Ausbildung der Mischelemente andererseits vor dem Hintergrund, die axiale Vermischung des Ausgangsmaterials zum Erhalt eines homogeneren Endproduktes zu verbessern, ist im Stand der Technik nicht vorgesehen. Nachteilig bei Drehrohren des Standes der Technik ist somit die nicht immer optimale axiale Durchmischung des Ausgangsmaterials bzw. Beladungsgutes, so daß folglich auch das resultierende Endprodukt nicht immer hinsichtlich seiner Homogenität optimiert ist.

So betrifft die Druckschrift DE 2 325 781 A1 ein Verfahren zum Betrieb eines Drehrohrofens mit einem im Durchmesser eingezogenen auslaufseitigen Ofenende sowie mit an der Ofeninnenwand vorgesehenen Einbauten zur Förderung des im Ofen befindlichen Brenngutes. Der Ofen wird im Normalbetrieb mit derjenigen Drehrichtung betrieben, bei der die Einbauten eine dem Gutfluß entgegengerichtete Förderwirkung ausüben, während der Ofen bei Bildung von Agglomeraten des Brenngutes in entgegengesetzter Drehrichtung angetrieben wird, so daß die Agglomerate durch die Einbauten zum auslaufseitigen Ofenende gefördert werden.

Weiterhin betrifft die Druckschrift DE 423 492 C eine zylindrische, beiderseits kegelig auslaufende Drehtrommel zum Brennen von Gips, bei welcher der zylindrische Teil schraubenförmige Förderleisten von entgegengesetzter Neigung trägt. Jede Mantellinie des zylindrischen Teils trifft nur eine einzige der fast über die gesamte Trommellänge reichenden Förderleisten. Zwei benachbarte, entgegengesetzt geneigte Förderleisten sind zudem bis an oder nahezu an ihren Schnittpunkt geführt, welcher ungefähr am Ende des zylindrischen Trommelteiles liegt.

Die Druckschrift US 2 939 693 A betrifft einen Drehrohrofen, welcher im Rahmen eines Verfahrens zur Wärmebehandlung eines bei einer kritischen Temperatur expandieren Ausgangsmaterials zur Herstellung von Leichtmaterialien eingesetzt wird, wobei innerhalb des Drehrohrofens Hebeelemente bzw. Leisten vorgesehen sein können.

Vor diesem technischen Hintergrund besteht somit die Aufgabe der vorliegenden Erfindung darin, eine Apparatur bzw. ein Drehrohr zur Verfügung zu stellen, welche bzw. welches sich insbesondere für die Herstellung von Aktivkohle eignet, wobei die zuvor geschilderten Nachteile des Standes der Technik zumindest teilweise vermieden oder aber wenigstens abgeschwächt werden sollen. Insbesondere soll ein Drehrohr bereitgestellt werden, welches zu einer verbesserten axialen Durchmischung des Ausgangsmaterials bzw. des Beladungsgutes führt, so daß mit einem derartigen Drehrohr besonders homogene Aktivkohlematerialien als Endprodukte mit gleichmäßig großen Porenvolumen hergestellt werden können.

Zur Lösung des zuvor geschilderten Problems schlägt die vorliegende Erfindung ein Drehrohr nach Anspruch 1 vor. Weitere, vorteilhafte Ausgestaltungen sind Gegenstand der Unteransprüche.

Weiterer Gegenstand der vorliegenden Erfindung ist ein Drehrohrofen nach Anspruch 13, welcher das erfindungsgemäße Drehrohr umfaßt.

Schließlich ist ein weiterer Gegenstand der vorliegenden Erfindung **ein Verfahren zur Herstellung von Aktivkohle unter** Verwendung des erfindungsgemäßen Drehrohres bzw. Drehrohrofens entsprechend Anspruch 14. Weitere, vorteilhafte Ausgestaltungen **des** erfindungsgemäßen **Verfahrens** sind Ge**genstand des diesbezügliche Verfahrensnnterauspruchs.**

Gegenstand der vorliegenden Erfindung - gemäß einem ersten Aspekt der vorliegenden Erfindung - ist somit ein Drehrohr, insbesondere für einen Drehrohrofen zur Herstellung von Aktivkohle, mit einem Übergangsbereich von einem kleineren Innenquerschnitt zu einem größeren Innenquerschnitt des Drehrohres und mit mehreren im Innenraum des Drehrohres angeordneten platten- und/oder schaufelförmigen Mischelementen zur Durchmischung eines Beladungsgutes,
wobei die Mischelemente zumindest im wesentlichen abschnittsweise zur Längsachse des Drehrohres geneigt sind, wobei der Neigungswinkel der Mischelemente oder deren Abschnitte zur Längsachse des Drehrohre, bezogen auf deren zweidimensionale Projektionsebene, in Abhängigkeit von der Position der Mischelemente entlang der Längsachse des Drehrohres ausgebildet und/oder ausgewählt ist derart, daß die Mischelemente im Bereich des kleineren Innenquerschnittes des Übergangsbereiches einen geringeren Neigungswinkel aufweisen als die in Richtung des größeren Innendurchmessers des Übergangsbereiches angeordneten Mischelemente,
wobei die Mischelemente im Übergangsbereich ausgebildet und/oder angeordnet sind derart, daß das Beladungsgut im Betrieb von den Mischelementen zum kleineren Innenquerschnitt hin gefördert wird.

Denn die Anmelderin hat überraschenderweise herausgefunden, daß insbesondere die axiale Durch- bzw. Vermischung des Beladungsgutes bzw. des Ausgangsmaterials zur Aktivkohleherstellung beträchtlich verbessert werden kann, wenn das Drehrohr einen Übergangsbereich von einem kleineren Innenquerschnitt zu einem größeren Innenquerschnitt sowie Mischelemente aufweist, welche im Betrieb des Drehrohres das Beladungsgut zum kleineren Innenquerschnitt hin fördern. Gleichzeitig wird selbstverständlich auch eine optimale radiale bzw. horizontale Durchmischung des Beladungsguts erreicht.

Auf diese Weise wird ein Drehrohr geschaffen, welches zu einer hervorragenden axialen Durchmischung, also zu einer hervorragenden Durchmischung des Beladungsgutes entlang der Längsachse des erfindungsgemäßen Drehrohres, führt, wobei gewährleistet ist, daß während der Durchmischung keine Entmischung bzw. Enthomogenisierung, d. h. keine Aufspaltung des Beladungsgutes in Fraktionen größerer und kleinerer Teilchen, und keine Vermahlung des Beladungsgutes stattfindet, was zu einer besseren Homogenität des Beladungsgutes und damit auch der daraus resultierenden Aktivkohle führt.

Ein Grundprinzip der vorliegenden Erfindung ist somit darin zu sehen, daß durch die spezielle Positionierung und Ausbildung der Mischelemente im Übergangsbereich gewissermaßen eine Gegenläufigkeit des Transportvorgangs durch die Mischelemente zum Transportvorgang in Richtung des durch die verschiedenen Innenquerschnitte des Übergangsbereiches resultierenden Gefälles des Drehrohres resultiert. Mit anderen Worten transportieren die Mischelemente, insbesondere Wendebleche, das Beladungsgut gewissermaßen in entgegengesetzter Richtung zum Gefälle des Übergangsbereiches, was zu einer guten axialen Durchmischung des Beladungsgutes führt. Hierdurch wird insbesondere eine Separierung des Beladungsgutes in große bzw. Teilchen in effektiver Weise vermieden und ein gleichmäßiges Inkontaktbringen des Beladungsgutes beispielsweise mit der oxidierenden Atmosphäre im Rahmen des Aktivierungsschrittes gewährleistet, wodurch ein besonders homogenes Endprodukt resultiert.

Weiterhin kann das erfindungsgemäße Drehrohr gemäß einer erfindungsgemäß besonders bevorzugten Ausführungsform zur Erhöhung der mechanischen Stabilität, insbesondere Widerstandsfähigkeit gegenüber Deformationen bei hohen Betriebstemperaturen, außenseitig mit Verstärkungselementen ausgestattet sein. Gemäß einer weiteren erfindungsgemäß bevorzugten Ausführungsform kann es zudem vorgesehen sein, daß die Mischelemente außenseitig am Drehrohr befestigt bzw. verschweißt sind, vorzugsweise ausschließlich durch die außenseitige Befestigung bzw. Verschweißung mit dem Drehrohr verbunden sind, um die Schweißverbindung vor den korrosiven Bedingungen im Innenraum des Drehrohres und den dort vorherrschenden hohen Betriebstemperaturen zu schützen.

Weitere Vorteile, Eigenschaften, Aspekte, Besonderheiten und Merkmale der vorliegenden Erfindung ergeben sich aus der folgenden Beschreibung eines in der Zeichnung dargestellten, bevorzugten Ausführungsbeispiels. Es zeigt:
- Fig.1: eine schematische Seitenansicht eines Drehrohres nach einem bevorzugten Ausführungsbeispiel der vorliegenden Erfindung mit einem vergrößerten Ausschnitt eines Teilbereiches des Drehrohres;
- Fig. 2A: einen radialen Querschnitt durch das Drehrohr;
- Fig. 2B: einen vergrößerten Ausschnitt des in Fig. 2A gekennzeichneten Bereiches;
- Fig. 3A - D: eine schematische Seitenansicht eines Drehrohres gemäß einer weiteren erfindungsgemäß bevorzugten Ausführungsform mit Ausschnitten A), B), C) und D) von verschieden ausgebildeten Ausgestaltungen der Verstärkungselemente.

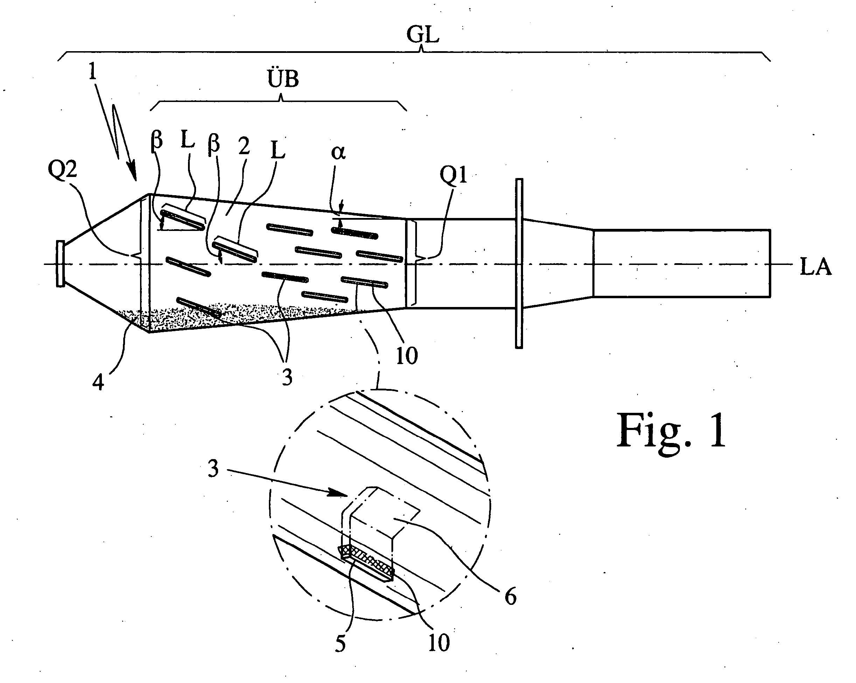

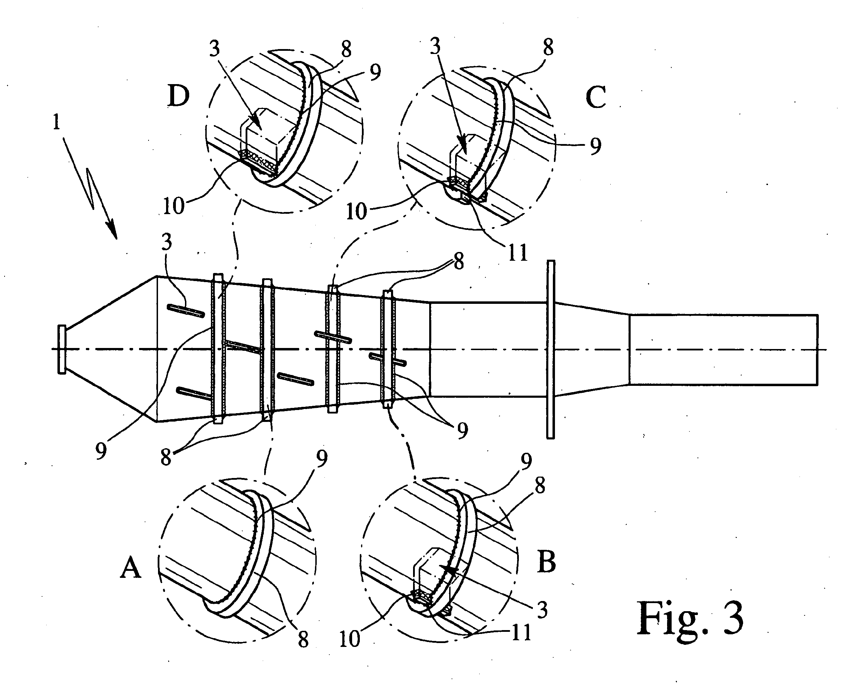

Fig. 1 und 3 zeigen ein Drehrohr 1 nach der vorliegenden Erfindung, welches für einen Drehrohrofen zur Herstellung von Aktivkohle verwendet werden kann. Wie den Fig. 1 und 3 zu entnehmen ist, weist das erfindungsgemäße Drehrohr 1 mehrere im Innenraum 2 des Drehrohres 1 angeordnete Mischelemente 3 zur Durchmischung eines Beladungsgutes 4 auf. Das erfindungsgemäße Drehrohr 1 zeichnet sich dadurch aus, daß es einen Übergangsbereich ÜB von einem kleineren Innenquerschnitt Q1 zu einem größeren Innenquerschnitt Q2 des Drehrohres 1 aufweist, und daß die Mischelemente 3 im Übergangsbereich ÜB ausgebildet bzw. angeordnet sind derart, daß das Beladungsgut 4 im Betrieb von den Mischelementen 3 zum kleineren Innenquerschnitt Q1 hin gefördert wird.

Wie zuvor geschildert, wird durch die spezielle Ausgestaltung des Übergangsbereiches ÜB mit einem kleineren und einem größeren Innenquerschnitt Q1, Q2 sowie der speziellen Ausbildung bzw. Anordnung der Mischelemente 3 im Übergangsbereich ÜB eine besonders gute axiale Durch- bzw. Vermischung des Beladungsgutes erreicht, was in wirkungsvoller Weise eine Entmischung des Beladungsgutes, insbesondere eine Trennung von großen und kleinen Teilchen, bzw. eine Enthomogenisierung des Beladungsgutes verhindert. Aufgrund der besseren bzw. gleichmäßigen Abfuhr von Reaktionsprodukten während der Carbonisierung des Beladungsgutes bzw. des verbesserten Inkontaktbringens des Beladungsgutes mit der oxidativen Atmosphäre während des Aktivierungsprozesses wird mit Hilfe des erfindungsgemäßen Drehrohres 1 eine Aktivkohle mit hervorragenden Eigenschaften erhalten.

Die gute axiale Durchmischung wird insbesondere dadurch erreicht, daß die Mischelemente, insbesondere in Form von Wendeblechen, beispielsweise als Umwälz- oder Transportbleche, welche synonym auch als Materialleitbleche bezeichnet werden, ausgebildet sind, gewissermaßen einen zur Transportrichtung im Übergangsbereich gegenläufigen Transportprozeß, nämlich in entgegengesetzter Richtung zum Gefälle des Übergangsbereiches, bei Betrieb des Drehrohres hervorrufen.

Aufgrund der verbesserten axialen Durchmischung resultiert durch Verwendung des erfindungsgemäßen Drehrohres 1 im Rahmen der Herstellung von Aktivkohle ein Aktivkohlematerial mit gleichmäßiger Porenstruktur und einer einheitlich großen Oberfläche. Dies ist - ohne sich auf eine bestimmte Theorie festlegen zu wollen - dadurch zu begründen, daß sich Teilchen bzw. Partikel des Beladungsgutes mit größerem Teilchen- bzw. Partikeldurchmesser oberflächennah, d. h. im Bereich der Innenwandung des Drehrohres schneller bewegen, wodurch gewissermaßen unter Ausbildung einer Wirbelschicht eine vergrößerte Kontaktfläche des Beladungsgutes zur Umgebungsatmosphäre resultiert.

Der Ausdruck "Betrieb" (d. h. Betrieb des Drehrohrofens) ist im Rahmen der vorliegenden Erfindung derart zu verstehen, daß insbesondere während der Herstellung der Aktivkohle eine Drehung bzw. Rotation des Drehrohres in eine definierte Richtung, beispielsweise im Uhrzeigersinn, vorliegt.

Was den Begriff "Längsachse" (Längsachse des Drehrohres) betrifft, so ist hierunter gleichermaßen die Dreh- bzw. Rotationsachse des Drehrohres zu verstehen.

Fig. 1 und 3 zeigen eine erfindungsgemäß bevorzugte Ausführungsform, wonach der Übergangsbereich ÜB des Drehrohres 1 konus- und/oder kegelstumpfartig ausgebildet ist. In diesem Zusammenhang kann der Übergangsbereich ÜB des Drehrohres 1 insbesondere im Schnitt entlang der Längsachse konusförmig ausgebildet sein. Mit anderen Worten kann der Übergangsbereich ÜB des Drehrohres 1 konisch vergrößert bzw. konisch erweitert sein. Hierdurch wird insbesondere bei Betrieb des Drehrohres ein erster Transportvorgang des Beladungsgutes ausgehend vom kleineren Innenquerschnitt Q1 in Richtung des größeren Innenquerschnitts Q2 hervorgerufen.

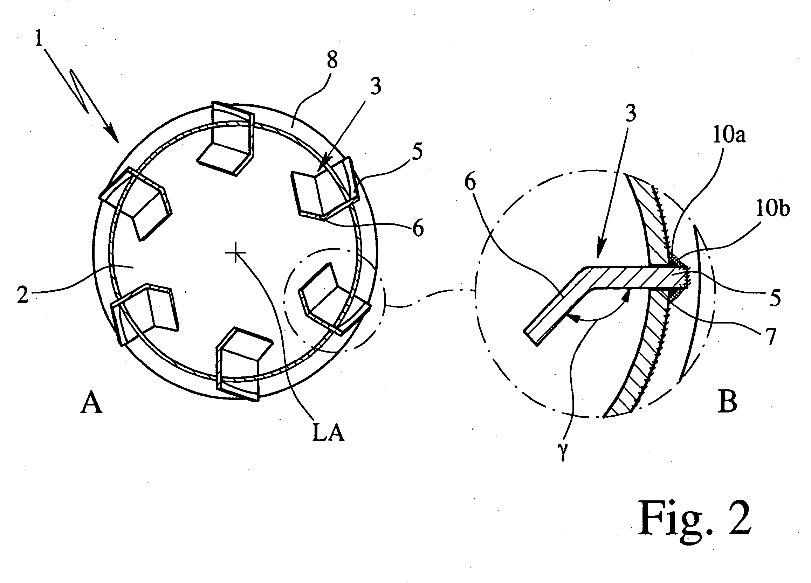

Fig. 1 und 2 verdeutlichen weiterhin, daß gemäß einer weiteren erfindungsgemäßen Ausführungsform die Enden des Übergangsbereiches ÜB des Drehrohres 1 mit zylinderförmigen Abschnitten und/oder mit zum Übergangsbereich ÜB des Drehrohres 1 insbesondere gegenläufigen Konusabschnitten ausgestattet sind, die sozusagen nach Art eines "Deckels" einen Austritt von Beladungsgut 4 aus dem Drehrohr 1 im Betrieb verhindern und/oder eine gute Zufuhr des Beladungsgutes 4 zum Übergangsbereich ÜB gewährleisten sollen.

Was die Ausbildung des Übergangsbereiches ÜB des Drehrohres 1 anbelangt, so kann sich dieser bis zu 90 %, insbesondere bis zu 80 %, vorzugsweise bis zu 70 %, über die Gesamtlänge GL des Drehrohres 1 erstrecken. Insbesondere kann es erfindungsgemäß vorgesehen sein, daß sich der Übergangsbereich ÜB des Drehrohres 1 über 10 bis 90 %, insbesondere 20 bis 80 %, vorzugsweise 30 bis 70 %, der Gesamtlänge GL des Drehrohres 1 erstreckt. Das ermöglicht eine optimale und nachhaltige Durchmischung des Beladungsguts 4 auch in axialer Richtung (neben der durch Umwälzung erzielten radialen bzw. horizontalen Durchmischung, die selbstverständlich gleichermaßen erreicht wird).

Was den Übergangsbereich ÜB weiterhin anbelangt, so kann dieser - wie in Fig. 1 zu sehen - einen Steigungswinkel α der Mantelfläche des Übergangsbereiches ÜB zur Längsachse LA des Drehrohres 1, bezogen auf deren zweidimensionale Projektionsebene, im Bereich von 1 bis 15 °, insbesondere 2 bis 10 °, vorzugsweise 3 bis 7 °, aufweisen.

Der Fachmann ist jederzeit in der Lage, die zuvor genannten Parameter in bezug auf die Ausbildung des Übergangsbereiches ÜB des Drehrohres 1 derart auszuwählen, daß eine Optimierung der axialen Durchmischung des Beladungsgutes 4 - insbesondere im Zusammenhang mit der spezifischen Anordnung der Mischelemente 3 - resultiert.

Was die Mischelemente 3 anbelangt, so sind diese platten- und oder schaufelförmig ausgebildet, wobei erfindungsgemäß eine schaufelförmige Ausbildung der Mischelemente 3 bevorzugt ist, insbesondere wie sie in der Ausschnittsvergrößerung zu Fig. 1 und in Fig. 2A, 2B sowie Fig. 3 dargestellt ist. Denn durch die schaufelförmige Ausgestaltung der Mischelemente 3 kann die zu transportierende Menge an Beladungsgut 4 weiter erhöht werden, wobei insbesondere im Betrieb des Drehrohres 1 ein frühzeitiges Abrutschen des Beladungsgutes 4 von den Mischelementen 3 vermieden wird. Durch die schaufelförmige Ausbildung der Mischelemente 3 wird insbesondere eine sichere und intensive Durchmischung und Umwälzung des Beladungsgutes 4 gewährleistet. Als Mischelemente 3 können beispielsweise Bleche, insbesondere gewinkelte Bleche (Winkelbleche), verwendet werden, welche in der Art einer Schaufel das Beladungsgut 4 durchmischen. Dies ist dem Fachmann als solches bekannt.

Gemäß einer besonders bevorzugten Ausführungsform der vorliegenden Erfindung sind die Mischelemente 3, insbesondere zumindest im wesentlichen abschnittsweise, vorzugsweise vollständig, zur Längsachse LA des Drehrohres 1 geneigt. Diesbezüglich ist es erfindungsgemäß **vorgesehen,** daß der Anstell- bzw. Neigungswinkel β der Mischelemente 3 oder deren Abschnitte zur Längsachse LA des Drehrohres 1, bezogen auf deren zweidimensionale Projektionsebene, in Abhängigkeit von der Position der Mischelemente 3 entlang der Längsachse LA des Drehrohres 1 ausgebildet ist. Diesbezüglich **ist** es **weiterhin** vorgesehen, daß - wie in Fig. 1 dargestellt - die Mischelemente 3 im Bereich des kleineren Innenquerschnitts Q1 des Übergangsbereichs ÜB einen geringeren Anstell- bzw. Neigungswinkel β aufweisen als diejenigen Mischelemente 3, welche in Richtung des größeren Innendurchmessers Q2 des Übergangsbereiches ÜB angeordnet sind. Hierdurch kann gewissermaßen eine positionsspezifische Abstufung des Durchmischungsvorganges entlang der Längsachse LA des Drehrohres 1 erreicht werden, was zu einer weiteren Optimierung des Durchmischungsvorganges an sich führt. In diesem Zusammenhang kann es auch vorgesehen sein, daß die axiale Durchmischung beispielsweise im Bereich von Heizelementen lokal vergrößert ist.

Was den zuvor definierten Anstell- bzw. Neigungswinkel β der Mischelemente 3 anbelangt, so kann dieser im Bereich von 1 bis 45 °, insbesondere 2 bis 35 °, bevorzugt 3 bis 30 °, besonders bevorzugt 4 bis 25 °, ganz besonders bevorzugt 5 bis 20 °, liegen,

Weiterhin können die Mischelemente 3 Längen L, insbesondere bezogen auf deren Orientierung zur Längsachse LA des Drehrohres 1, im Bereich von 1 bis 500 mm, insbesondere 20 bis 450 mm, bevorzugt 50 bis 400 mm, besonders bevorzugt 75 bis 350 mm, ganz besonders bevorzugt 100 bis 300 mm, aufweisen.

Was die konkrete Ausbildung der Mischelemente anbelangt, so kann der Anstell- bzw. Neigungswinkel β in Abhängigkeit von der Form der Mischelemente 3, insbesondere von den Längen L der Mischelemente 3, insbesondere bezogen auf deren Orientierung zur Längsachse LA des Drehrohres 1, ausgebildet bzw. ausgewählt sein.

Insgesamt kann es erfindungsgemäß somit vorgesehen sein, die Mischelemente 3 hinsichtlich ihrer Ausgestaltung derart mit dem Drehrohr 1 als solchem bzw. dessen Übergangsbereich ÜB abzustimmen, daß eine optimale axiale Durchmischung des Beladungsgutes 4 resultiert. Mit anderen Worten können die jeweiligen Komponenten des erfindungsgemäßen Drehrohres 1 vor dem Hintergrund der Gewährleistung einer guten bzw. optimierten axialen Durchmischung des Beladungsgutes 4 aufeinander abgestimmt werden.

So kann beispielsweise der Anstell- bzw. Neigungswinkel β der Mischelemente 3 in Abhängigkeit von der Form der Mischelemente 3, insbesondere von den Längen L der Mischelemente 3, ausgebildet bzw. ausgewählt sein. Diesbezüglich kann es erfindungsgemäß vorgesehen sein, daß der Anstell- bzw. Neigungswinkel β bei einer größeren Länge L der Mischelemente 3 entsprechend kleiner ist bzw. daß der Anstell- bzw. Neigungswinkel β bei einer geringeren Länge L der Mischelemente 3 entsprechend größer ist, um einen definierten axialen Transport des Beladungsgutes zum kleineren Innenquerschnitt des Übergangsbereiches ÜB zu gewährleisten. Mit anderen Worten kann eine kürzere Länge L des Mischelementes 3 durch einen größeren Anstell- bzw. Neigungswinkel β kompensiert werden und umgekehrt.

In diesem Zusammenhang kann die Ausbildung der Mischelemente 3 somit auch auf die Ausbildung des Übergangsbereiches ÜB abgestimmt werden, insbesondere in bezug auf dessen Verhältnis des kleineren Innenquerschnitts Q1 zum größeren Innenquerschnitt Q2, auf den Steigungswinkel α des Übergangsbereichs ÜB (d. h. den eigentlichen Konuswinkel) und/oder auf dessen Länge. So kann es vorgesehen sein, daß - ohne sich hierauf beschränken zu wollen - bei einem großen Steigungswinkel α der Mantelfläche des Übergangsbereiches ÜB zur Längsachse LA der Anstell- bzw. Neigungswinkel β der Mischelemente 3 bzw. die Längen L der Mischelemente 3 entsprechend kleiner ausgebildet sind. Mit anderen Worten können die Mischelemente 3 hinsichtlich ihrer Längen L und der Anstell- bzw. Neigungswinkel β in Abhängigkeit vom Gefälle, von der Länge und der Form des Übergangsbereichs ÜB ausgebildet werden, wobei die Mischelemente 3 gleichermaßen entlang der Längsachse LA des Drehrohres 1 im Übergangsbereichs ÜB des Drehrohres 1 unterschiedlich ausgebildet sein können. In bezug auf die Ausbildung des erfindungsgemäßen Drehrohres 1 kann insbesondere auch berücksichtigt werden, daß der Übergangsbereich ÜB des Drehrohres 1 unter Berücksichtigung des maximalen Volumenverlustes und des dadurch resultierenden Volumenstromes des Beladungsgutes 4 ausgebildet wird.

Wie in der Ausschnittsvergrößerung zu Fig. 1 und in Fig. 2A und 2B sowie in Fig. 3B bis D dargestellt, können die Mischelemente 3 Befestigungsschnitte 5 aufweisen, welche vorzugsweise der Fixierung der Mischelemente 3 an der Wandung des erfindungsgemäßen Drehrohres 1 dienen. Darüber hinaus können die Mischelemente 3 auch Schaufelabschnitte 6 aufweisen, welche in den Innenraum 2 des Drehrohres 1 ragen und - wie zuvor beschrieben - dem Transport des Beladungsgutes dienen und somit gewissermaßen eine Schaufelfunktion aufweisen.

In diesem Zusammenhang ist es erfindungsgemäß möglich, daß die Schaufelabschnitte 6, insbesondere an deren freien Enden, abgewinkelt sind, insbesondere wobei die Schaufelabschnitte 6 einen Winkel γ im Bereich von 90 bis 175°, insbesondere 100 bis 160°, vorzugsweise 110 bis 150°, aufweisen. Gemäß einer erfindungsgemäß besonders bevorzugten Ausführungsform beträgt der Winkel γ 135 °. In diesem Fall sind die Mischelemente 3 also sozusagen als Winkelbleche ("Wendebleche") ausgebildet.

Gemäß einer weiteren erfindungsgemäßen Ausführungsform können die Mischelemente 3 das Drehrohr 1 radial durchgreifen. Diesbezüglich kann es vorgesehen sein, daß die Mischelemente 3 außenseitig mit dem Drehrohr 1 verschweißt sind, wobei es insbesondere vorgesehen ist, daß das Drehrohr 1 Durchbrechungen 7 zur Aufnahme der Befestigungsabschnitte 5 der Mischelemente 3 aufweist und die Befestigungsabschnitte 5 mit dem Drehrohr 1 über eine Schweißverbindung 10 außenseitig verschweißt sind.

Die Befestigungsabschnitte 5 der Mischelemente 3 können also sozusagen durch die Durchbrechungen 7 in der Drehrohrwandung durchgesteckt und außenseitig verschweißt sein. Hierdurch wird insbesondere vermieden, daß die Verschweißungsstellen bzw. Schweißverbindungen 10 den im Innenraum 2 des Drehrohres im Betriebszustand vorherrschenden aggressiven Bedingungen bei der Aktivkohleherstellung - korrosive Gase bei der Carbonisierung und hohe Temperaturen bei der Aktivierung - ausgesetzt sind. Dadurch, daß die Verschweißungsstellen bzw. Schweißverbindungen 10 auf diese Weise einer deutlich geringeren Belastung ausgesetzt sind, wird deren Standzeit deutlich erhöht. Durch die außenseitige Verschweißung wird zudem die Wartung entscheidend erleichtert: Die Verschweißungsstellen zwischen Mischelementen/Drehrohr lassen sich von außen ohne weiteres überprüfen und warten und bei Bedarf ausbessern bzw. reparieren. Eine Wartung kann daher selbst im Betriebszustand des Drehrohres erfolgen.

Auf diese Weise können außerdem Verschweißungsmaterialien (synonym auch Schweißmaterialien oder Schweißgut genannt) zum Einsatz kommen, welche eine optimale und dichte Verbindung zwischen Mischelementen 3 und Drehrohr 1 gewährleisten, aber den im Betrieb vorherrschenden korrosiven Hochtemperaturbedingungen im Inneren des Drehrohres 1 ansonsten nicht ohne weiteres dauerhaft standhalten würden.

In diesem Zusammenhang kann der erfindungsgemäße Drehrohrofen 1 derart ausgebildet sein, daß die Mischelemente 3 ausschließlich über die außenseitige Verschweißung 10 mit der Drehrohrwandung verbunden sind. Weitere Befestigungsmittel, wie Schrauben, Bolzen, innere Schweißverbindungen und dergleichen, sind dabei erfindungsgemäß nicht erforderlich.

Die Durchbrechungen 7 in der Wandung des Drehrohres 1, welche zur Aufnahme der Befestigungsabschnitte 5 der Mischelemente 3 dienen, sind im allgemeinen schlitzartig ausgebildet. Durch diese insbesondere schlitzartigen Durchbrechungen 7 können dann die Befestigungsabschnitte 5 der Mischelemente 3 durchgesteckt sein, vorteilhafterweise so, daß die Befestigungsabschnitte 5 vorragen, d. h. ein wenig von der äußeren Ummantelung des Drehrohres 1 abstehen, damit sie besser verschweißt werden können. Dies ist in Fig. 1 (Ausschnittsvergrößerung) sowie Fig. 2A und 2B ersichtlich.

Was die Befestigungsabschnitte 5 der Mischelemente 3 anbelangt, so sind verschiedene Ausgestaltungen möglich, um eine sichere Verbindung der Befestigungsabschnitte 5 mit dem Drehrohr 1 zu gewährleisten: Beispielsweise besteht die Möglichkeit, daß sich die Befestigungsabschnitte 5 der Mischelemente 3 über die gesamte Anlage- oder Umfangslänge der Mischelemente 3 erstrecken; in diesem Fall sind die Befestigungsabschnitte 6 vollständig durch die Durchbrechungen 5 in der Wandung des Drehrohrofens 1 durchgesteckt, und eine solche Ausführungsform ist in der Ausschnittsvergrößerung von Fig. 1 dargestellt. Alternativ besteht die Möglichkeit, daß die Befestigungsabschnitte 5 kürzer als die Anlage- oder Umfangslänge der Mischelemente 3 sind (nicht dargestellt). In den letztgenannten Fällen können die Mischelemente 3 beispielsweise eine Schulter am Übergang zum Befestigungsschnitt 5 aufweisen, welche insbesondere zur Anlage an die Innenseite bzw. Innenwandung des Drehrohres 1 dient. Auch besteht die Möglichkeit, daß die Mischelemente 3 jeweils mehrere, in unterschiedliche Durchbrechungen 7 eingreifende Befestigungsabschnitte 5 aufweisen (nicht dargestellt).

Was die Mischelemente 3, insbesondere Wendebleche, als solche sowie deren Verschweißung an der Drehrohrwandung anbelangt, so kann insbesondere auf die DE 10 2004 036 109 A1 bzw. die US 2006 269887 A verwiesen werden, deren jeweiliger gesamter Offenbarungsgehalt hiermit durch Bezugnahme eingeschlossen ist.

Was das Drehrohr 1 und die Mischelemente 3 anbelangt, so bestehen diese vorteilhafterweise aus hochtemperatur- und korrosionsbeständigem Material, insbesondere Stahl. Denn sowohl das Drehrohr 1 als auch die Mischelemente 3 müssen den extrem korrosiven Bedingungen der Carbonisierungsphase und den Hochtemperaturbedingungen der Aktivierungsphase bei der Herstellung von Aktivkohle standhalten. Beispiele für geeignete hochtemperatur- und korrosionsbeständige Stähle, aus denen das Drehrohr 1 und/oder die Mischelemente 3 hergestellt werden können, sind hochlegierte Stähle, d. h. Stähle mit mehr als 5 % Legierungselementen. Beispiele hierfür sind hochlegierte Chrom- und Chrom/Nickel-Stähle, vorzugsweise mit einem Chrom- und/oder Nickelanteil über 10 %, insbesondere über 15 %, besonders bevorzugt über 20 %, bezogen auf die Legierung. Bevorzugt werden als Material für die Herstellung des Drehrohres 1 und/oder der Mischelemente 3 ferritische oder ferritisch-austenitische Stähle mit gutem Korrosions- und Hochtemperaturverhalten verwendet.

Wie aus Fig. 1 (Ausschnittsvergrößerung) und Fig. 2B ersichtlich, erfolgt die außenseitige Verschweißung der Befestigungsabschnitte 5 der Mischelemente 3 mit dem Drehrohr 1 über einen Schweißabschnitt 10. Dieser Schweißabschnitt 10 weist vorteilhafterweise mindestens zwei Schweißschichten bzw. zwei Schweißnähte 10a, 10b auf. Die beiden Schweißschichten bzw. Schweißnähte 10a, 10b sind vorteilhafterweise übereinander angeordnet bzw. aufgebracht. Es entstehen somit doppelte Schweißschichten bzw. Schweißnähte 10a, 10b. Dies hat den Vorteil, daß für die verschiedenen Schweißschichten 10a, 10b unterschiedliche Materialien eingesetzt werden können. Beispielsweise können auf diese Weise Schweißmaterialien unterschiedlicher Temperatur- und Korrosionsbeständigkeit eingesetzt bzw. miteinander kombiniert werden, wobei die innere Schweißschicht 10a vorteilhafterweise korrosions- und hochtemperaturbeständig sein sollte, während eine Korrosionsbeständigkeit bei der äußeren Schweißschicht 10b nicht in dem selben Maße gefordert ist. Durch die Verwendung mehrerer Schweißschichten bzw. Schweißnähte 10a, 10b wird eine dichte, insbesondere gasdichte, und zuverlässige Verschweißung der Befestigungsabschnitte 5 der Mischelemente 3 mit dem Drehrohr 1 erreicht. Gemäß einer besonderen Ausführungsform der vorliegenden Erfindung wird eine der beiden Schweißschichten 10a, 10b austenitisch, insbesondere vollaustenitisch, und die andere ferritisch-austenitisch ausgebildet. Besonders bevorzugt wird die innere Schweißschicht 10a austenitisch, insbesondere vollaustenitisch, und die äußere Schweißschicht 10b ferritisch-austenitisch ausgebildet. Gemäß einer bevorzugten Ausführungsform erfolgt die Verschweißung durch Auftragsschweißen (z. B. durch Elektrodenschweißen). Im allgemeinen erfolgt die Verschweißung derart, daß der Schweißabschnitt 10 zumindest im wesentlichen gasdicht ausgebildet ist.

Weiterhin kann es erfindungsgemäß vorgesehen sein, daß das Drehrohr 1 au-ßenseitig mit mindestens einem Verstärkungselement 8 zur Stabilisierung des Drehrohres 1 im Betrieb versehen ist. Somit kann ein Drehrohr 1 mit Verstärkungselementen 8 bereitgestellt werden, das im Betrieb, insbesondere unter extremen Temperaturbedingungen, formstabil ist und eine hohe Widerstandsfähigkeit gegenüber Deformationen aufweist. Denn die mechanische Stabilität bzw. die Formstabilität des Drehrohres 1 im Betrieb, insbesondere auch unter extremen Bedingungen (wie sie z. B. bei der Aktivkohleherstellung auftreten), kann beträchtlich verbessert werden, wenn das Drehrohr 1 an seiner Außenseite bzw. Außenwandung mit mindestens einem Verstärkungselement 8, vorzugsweise mit einer Mehrzahl von Verstärkungselementen 8, versehen wird.

Auf diese Weise wird ein Drehrohr 1 geschaffen, welches mechanischen Deformationen besser widerstehen kann und resistenter auch gegenüber starken Druckdifferenzen und Druckschwankungen ist und somit auch unter Betriebsbedingungen formstabil ist. Das erfindungsgemäße Drehrohr 1 weist folglich gemäß dieser erfindungsgemäßen Ausführungsform eine zusätzlich verbesserte Lebensdauer mit verringerter Tendenz zur vorzeitigen Materialermüdung auf. Auch sind infolgedessen die Prozeßführung und Prozeßkontrolle erleichtert.

Das Verstärkungselement 8 kann derart ausgebildet sein, daß das Drehrohr 1 in seinem Querschnitt und/oder in seiner Längserstreckung stabilisiert wird. Wie in den Fig. 2 sowie Fig. 3 zu sehen ist, kann sich das Verstärkungselement 8 peripher um das Drehrohr 1 erstrecken. Dabei kann sich das Verstärkungselement 8 beispielsweise senkrecht oder geneigt zur Drehachse des Drehrohres 1 erstrecken, wodurch eine Verstärkung bzw. Stabilisierung des Querschnittes des Drehrohres 1 realisiert wird. Was den Begriff "peripher" betrifft, so bezieht sich dieser auf eine umfangsmäßige Anordnung des Verstärkungselementes 8 auf der Außenseite bzw. Außenwandung des Drehrohres 1.

Was die Anordnung des Verstärkungselementes 8 betrifft, so ist dieses gemäß einer erfindungsgemäß bevorzugten Ausführungsform koaxial zum Drehrohr 1 angeordnet, wie Fig. 2 und 3 zeigen. Somit sind das Verstärkungselement 8 und das Drehrohr 1 in der Querschnittsfläche konzentrisch zueinander angeordnet.

Weiterhin verdeutlichen Fig. 2A sowie die Ausschnittsvergrößerungen A) bis D) von Fig. 3, daß sich das Verstärkungselement 8 vorzugsweise zumindest im wesentlichen vollständig über den Umfang des Drehrohres 1 erstreckt. Gleichermaßen ist es jedoch im Rahmen der vorliegenden Erfindung jedoch möglich, daß sich das Verstärkungselement 8 abschnittsweise, beispielsweise segmentartig, über den Umfang des Drehrohres 1 erstreckt.

Fig. 2 und Fig. 3A zeigen, daß das Verstärkungselement 8 gemäß einer erfindungsgemäß besonders bevorzugten Ausführungsform ringförmig ausgebildet sein kann. Dabei kann das Verstärkungselement 8 beispielsweise als Ringflansch bzw. nach Art eines Hohlzylinders ausgebildet sein. Um ein enges und das Drehrohr 1 stabilisierendes Anliegen des Verstärkungselementes 8 auf der Außenwandung des Drehrohres 1 zu gewährleisten, sollte dabei der Innendurchmesser des Verstärkungselementes 8 zumindest im wesentlichen dem Außendurchmesser des Drehrohres 1 entsprechen. Dies bedeutet, daß der Innendurchmesser der Verstärkungsringe im Übergangsbereich ÜB in Richtung des größeren Innenquerschnitts Q2 zunimmt.

Die vorliegende Erfindung ist nicht auf eine ring- oder hohlzylindrische Ausbildung des fakultativ vorgesehenen Verstärkungselementes 8 beschränkt. So kann es beispielsweise auch vorgesehen sein, daß das Verstärkungselement 8 rippenartig oder schraubenlinienförmig ausgebildet ist. Bei einer schraubenlinienförmigen Ausbildung des Verstärkungselementes 8 erstreckt sich das Verstärkungselement 8 gewissermaßen helixartig in Längsrichtung des Drehrohres 1 um dessen Umfang; auch bei dieser, in den Figuren nicht dargestellten Ausführungsform können das Verstärkungselement 8 und das Drehrohr 1 koaxial zueinander verlaufen bzw. angeordnet sein.

Gemäß einer weiteren erfindungsgemäßen Ausführungsform kann sich das Verstärkungselement 8 axial entlang des Drehrohres 1 erstrecken, wodurch insbesondere eine Stabilisierung des Drehrohres 1 in seiner Längserstreckung erreicht wird. Dabei kann sich das Verstärkungselement 8 insbesondere über die gesamte Länge des Drehrohres 1 erstrecken. Was die axiale Anordnung des Verstärkungselementes 8 betrifft, so kann das Verstärkungselement 8 bei dieser, in den Figuren nicht dargestellten Ausführungsform beispielsweise parallel zur Dreh- bzw. Längsachse des Drehrohres 1 auf der Außenwandung des Drehrohres 1 angeordnet sein.

Wie Fig. 3 zeigt, weist das Verstärkungselement 8 als solches z. B. einen zumindest im wesentlichen rechteckigen Querschnitt auf, wobei sich der Querschnitt des Verstärkungselementes 8 auf die Schnittfläche gemäß einem Schnitt in Radialebene des Verstärkungselementes 8 bezieht. Die Höhe bzw. Breite des Querschnittes des Verstärkungselementes 8 kann in weiten Grenzen variieren. Erfindungsgemäß bevorzugt können die Höhe und Breite des Querschnittes des Verstärkungselementes 8 beispielsweise 0,5 cm bis 10 cm, vorzugsweise 0,5 cm bis 8 cm, bevorzugt 1 cm bis 6 cm, besonders bevorzugt 1 cm bis 5 cm, betragen. Erfindungsgemäß kann der Querschnitt z. B. quadratisch ausgebildet sein, es ist jedoch gleichermaßen möglich und erfindungsgemäß bevorzugt, daß die Höhe und die Breite des Querschnittes des Verstärkungselementes 8 unterschiedlich sind. Hierbei ist es bevorzugt, daß die Höhe des Querschnittes des Verstärkungselementes 8 größer ist als dessen Breite. Erfindungsgemäß ist es jedoch auch grundsätzlich möglich, daß der Querschnitt des Verstärkungselementes 8 zumindest im wesentlichen kreisförmig bzw. rund ausgebildet ist, beispielsweise nach Art eines kreisförmig geschlossenen Stahldrahtes.

Erfindungsgemäß bevorzugt ist das fakultativ vorgesehene Verstärkungselement 8 mit dem Drehrohr 1 über eine Schweißverbindung 9 verschweißt, wie in Fig. 3A bis 3D zu sehen ist. Hierdurch wird eine dauerhafte Verbindung zwischen Verstärkungselement 8 einerseits und Drehrohr 1 andererseits gewährleistet. Gemäß einer erfindungsgemäß bevorzugten Ausführungsform verläuft die Schweißverbindung 9 entlang einer Kontaktlinie des Verstärkungselementes 8 mit dem Drehrohr 1 unterbrechungsfrei. Alternativ ist aber auch eine abschnittsweise bzw. segmentartige Schweißverbindung 9 des Verstärkungselementes 8 mit dem Drehrohr 1 oder eine punktförmige Ausbildung der Schweißverbindung 9 zur dauerhaften Befestigung des Verstärkungselementes 8 auf dem Drehrohr 1 möglich.

Erfindungsgemäß kann es vorgesehen sein, daß die Schweißverbindung 9 mindestens zwei Schweißschichten 9a, 9b aufweist (nicht dargestellt). Auf diese Weise entsteht somit gewissermaßen eine doppelte Schweißverbindung 9 mit Schweißschichten 9a, 9b. Für die verschiedenen Schweißschichten 9a, 9b können unterschiedliche Materialien eingesetzt werden. Für diesbezügliche Ausführungen kann auf die obigen Ausführungen betreffend die Verschweißung der Befestigungsabschnitte 5 der Mischelemente 3 mit dem Drehrohr 1 verwiesen werden.

Weitere Verbindungsarten zwischen Verstärkungselement 8 einerseits und Drehrohr 1 andererseits sind dem Fachmann hinlänglich bekannt: Hierzu können beispielsweise Verschrauben, Vernieten und dergleichen angeführt werden. Erfindungsgemäß ist jedoch eine solche Verbindung zwischen Verstärkungselement 8 und Drehrohr 1 bevorzugt, welche die Hülle des Drehrohres 1 nicht durchstößt.

Wie in Fig. 3 zu sehen ist, kann das Drehrohr 1 auch eine Mehrzahl von Verstärkungselementen 8 aufweisen. Dabei kann die Anzahl an Verstärkungselementen 8 insbesondere zwei bis zehn, vorzugsweise zwei bis acht, besonders bevorzugt drei bis sechs, betragen. Dabei ist es erfindungsgemäß bevorzugt, daß die Verstärkungselemente 8 gleichmäßig voneinander beabstandet bzw. äquidistant sind. Sofern anwendungsbezogen oder einzelfallbedingt erforderlich, kann gleichermaßen eine ungleichmäßige Beabstandung der Verstärkungselemente 8 vorgesehen sein: So kann beispielsweise bei besonders beanspruchten Abschnitten des Drehrohres 1 eine größere Anzahl von Verstärkungselementen 8 pro Längeneinheit des Drehrohres 1 befestigt sein.

Das Verstärkungselement 8 kann aus Metall, vorzugsweise Stahl, bestehen. Erfindungsgemäß bevorzugt kann das Verstärkungselement 8 aus demselben Material wie das Drehrohr 1 bestehen. Das Verstärkungselement 8 bzw. das Drehrohr 1 können besonders bevorzugt aus hochtemperaturbeständigem Stahl bestehen. Aufgrund des gleichen Materials weisen das Verstärkungselement 8 sowie das Drehrohr 1 zumindest im wesentlichen gleiche Ausdehnungskoeffizienten auf, so daß im Betriebszustand, d.h. bei sehr hohen Temperaturen, keine zusätzlichen Materialbeanspruchungen aufgrund eines unterschiedlichen Ausdehnungsverhalten des Verstärkungselementes 8 einerseits und des Drehrohres 1 andererseits auftreten. Außerdem wird hierdurch die Kompatibilität der Schweißverbindung verbessert.

Weiterhin kann es erfindungsgemäß vorgesehen sein, daß zur optimierten Temperaturkontrolle bzw. zur Verbesserung des Abkühlverhaltens des Drehrohres 1 das fakultativ vorgesehene Verstärkungselement 8 als Kühlelement bzw. Kühlkörper ausgebildet ist. Gemäß dieser Ausführungsform kann das Verstärkungselement 8 zusätzlich mit Kühlrippen versehen sein, die aufgrund der Oberflächenvergrößerung zu einem besseren Wärmeabgabeverhalten des Verstärkungselementes 8 und damit des Drehrohres 1 führen.

Die Ausschnittsvergrößerungen B) bis D) von Fig. 3 verdeutlichen weiterhin die unterschiedlichen Anordnungsmöglichkeiten des Verstärkungselementes 8 in bezug auf das Mischelement 3 bzw. dessen Befestigungsabschnitt 5:

So zeigt die Ausschnittsvergrößerung B) von Fig. 3 eine Anordnung, nach welcher sich der Befestigungsabschnitt 5 beidseitig gewissermaßen senkrecht zum Verstärkungselement 8 erstreckt und das Verstärkungselement 8 somit beispielsweise zumindest im wesentlichen mittig zu dem sich in Richtung der Dreh- bzw. Längsachse des Drehrohres 1 erstreckenden Befestigungsabschnitt 5 angeordnet ist bzw. den Befestigungsabschnitt 5 sozusagen "kreuzt". Um ein flächiges Anliegen der Innenfläche des Verstärkungselementes 8 auf der Außenseite des Drehrohres 1 zu gewährleisten, kann gemäß dieser Ausführungsform das Verstärkungselement 8 mindestens eine Aussparung 11 zur Aufnahme des Befestigungsabschnittes 5 aufweisen. Das erfindungsgemäße Verstärkungselement 8 kann im Bereich der Aussparung 11 mit dem Befestigungsabschnitt 5, beispielsweise mittels einer Verschweißung, dauerhaft verbunden sein.

Gemäß Ausschnittsvergrößerung C) von Fig. 3 ist eine erfindungsgemäße Ausführungsform zu sehen, nach welcher das Verstärkungselement 8 im Bereich des Befestigungsabschnittes 5 eine Unterbrechung bzw. Durchbrechung aufweist. In diesem Fall liegen die Querschnitte des Verstärkungselementes 8 gewissermaßen stumpf an der Längsseite des Befestigungsabschnittes 5 an. Auch bei dieser Ausführungsform kann eine Verschweißung der Kontaktflächen von Verstärkungselement 8 einerseits und Befestigungsabschnitt 5 andererseits vorgesehen sein.

Schließlich zeigt Ausschnittsvergrößerung D) von Fig. 3 eine weitere erfindungsgemäße Anordnung des Verstärkungselementes 8 auf dem Drehrohr 1, wonach das ringförmig ausgebildete Verstärkungselement 8 mit seiner Seitenwandung an der kurzen Seite des Befestigungsabschnittes 5 eines Mischelementes 3 anliegt. Dabei kann es vorgesehen sein, daß das Verstärkungselement 8 im Bereich der Kontaktstelle mit dem Befestigungsabschnitt 5 verschweißt ist. Auch gemäß dieser Ausführungsform kann gegebenenfalls eine Aussparung des Verstärkungselementes 8 vorgesehen sein (nicht dargestellt).

Durch die gegebenenfalls vorgesehene Befestigung des Verstärkungselementes 8 an den Befestigungsabschnitten 5 der Mischelemente 3 resultiert eine zusätzliche Stabilisierung des Drehrohres 1, da die jeweiligen Elemente - Verstärkungselement 8 einerseits und Befestigungsabschnitt 5 bzw. Mischelement 3 andererseits - sozusagen ineinandergreifen und sich somit gewissermaßen zusätzlich stabilisieren. Hierdurch wird insbesondere auch eine Stabilisierung der mechanisch stark beanspruchten Mischelemente 3 erreicht, so daß hierdurch eine zusätzliche Verlängerung der Apparaturlebensdauer gewährleistet wird.

Wie in Fig. 2A dargestellt, kann das Verstärkungselement 8 auch mit einer Mehrzahl an Mischelementen 3 bzw. deren Befestigungsabschnitten 5 verbunden sein: So ist gemäß Fig. 2A das Verstärkungselement 8 mit dem in der Querschnittsfläche oben und unten liegenden Mischelementen 3 verbunden.

Des weiteren weist das erfindungsgemäße Drehrohr 1 vorteilhafterweise Einlaß- und Auslaßeinrichtungen zum Einführen und Auslassen sowie Durchleiten von Gasen auf, beispielsweise zum Einleiten von Inertgasen für die Carbonisierungsphase bei der Aktivkohleherstellung und zum Einleiten von Oxidationsgasen für die Aktivierungsphase bei der Aktivkohleherstellung. Dies ist in den Figuren nicht dargestellt.

Zu einer verbesserten Wartung des Innenraums 2 des Drehrohres 1 kann dieses in der Wandung des Drehrohres ein sogenanntes Mannloch aufweisen, welches dicht mit dem Drehrohr 1 verschließbar ist und so das Einsteigen von Wartungspersonal in den Innenraum 2 des Drehrohres 1 außerhalb des Betriebs ermöglicht. Dies ist in den Figuren ebenfalls nicht dargestellt. Auf diese Weise wird eine Wartung auch des Innenraums 2 des Drehrohres 1 auf einfache Weise gewährleistet.

Wie zuvor beschrieben, wird das Drehrohr 1 nach der vorliegenden Erfindung insbesondere in Drehrohröfen zur Herstellung von Aktivkohle verwendet. Gegenstand der vorliegenden Erfindung - gemäß einem zweiten Aspekt der vorliegenden Erfindung - ist somit ein Drehrohrofen, welcher das zuvor beschriebene Drehrohr 1 nach der vorliegenden Erfindung aufweist.

Weiterer Gegenstand der vorliegenden Erfindung - gemäß einem dritten Aspekt der Erfindung - ist **ein Verfahren zur Herstellung von Aktivkohle** unter Verwendung eines wie zuvor beschriebenen Drehrohres 1 bzw. eines dieses Drehrohr 1 enthaltenen Drehrohrofens. Wie im Einleitungsteil der vorliegenden Erfindung beschrieben, erfolgt die Herstellung der Aktivkohle im allgemeinen durch Carbonisierung (synonym auch als Pyrolyse, Schwelung oder Verkokung bezeichnet) und nachfolgende Aktivierung kohlenstoffhaltiger Ausgangsmaterialien, insbesondere organischer Polymere, so z. B. sulfonierter organischer Polymere (z. B. sulfonierter divinylbenzolvernetzter Polystyrole), welche in dem Drehrohr bzw. Drehrohrofen nach der vorliegenden Erfindung carbonisiert und nachfolgend aktiviert werden. Dabei wird die Carbonisierung im allgemeinen bei Temperaturen von 100 °C bis 750 °C, insbesondere 150 °C bis 650 °C, vorzugsweise 200 °C bis 600 °C, durchgeführt, vorzugsweise unter inerter oder allenfalls leicht oxidierender Atmosphäre, wie im einleitenden Teil beschrieben. Dabei kann der Carbonisierung noch eine Stufe der Vorcarbonisierung bzw. Vorschwelung vorgeschaltet sein. Die Aktivierung wird dagegen im allgemeinen bei Temperaturen von 700 °C bis 1.200 °C, insbesondere 800 °C bis 1.100 °C, vorzugsweise 850 °C bis 1.000 °C, durchgeführt. Die Carbonisierung wird - wie im einleitenden Teil beschrieben - im allgemeinen unter kontrolliert bzw. selektiv oxidierenden Bedingungen, insbesondere unter kontrolliert oxidierender Atmosphäre, durchgeführt. Als geeignete Ausgangspolymere der vorgenannten Art sind insbesondere Ionenaustauscherharze (z. B. Kationenaustauscherharze bzw. saure Ionenaustauscherharze, vorzugsweise mit Sulfonsäuregruppen, so z. B. Kationenaustauscherharze auf Basis sulfonierter Styrol/Divinylbenzol-Copolymere) bzw. deren Vorstufen (d. h. die unsulfonierten Ionenaustauscherharze, welche vor oder bei der Carbonisierung noch mit einem geeigneten Sulfonierungsmit-z. B. Schwefelsäure und/oder Oleum, sulfoniert werden müssen) zu nennen. Für weitere diesbezügliche Einzelheiten kann auf obige Ausführungen im einleitenden Teil verwiesen werden.

Das Drehrohr bzw. der Drehrohrofen nach der vorliegenden Erfindung ermöglicht die Herstellung von Aktivkohle ausgehend von geeigneten kohlenstoffhaltigen Ausgangsmaterialien durch Carbonisierung und nachfolgende Aktivierung in einer einzigen Apparatur unter relativ leichter Handhabung. Durch die erfindungsgemäße Ausbildung des Übergangsbereiches und der speziellen Konzeption und Anordnung der Wendebleche wird eine gute axiale Durchmischung des Beladungsgutes erreicht, was zu homogenen und leistungsfähigen Endprodukten, insbesondere in Form von Aktivkohle, führt, da stets für die Gesamtheit des Beladungsgutes ein gleichmäßiger Kontakt mit der Umgebungsatmosphäre resultiert, so daß lokale Konzentrationsgradienten minimiert werden. Aufgrund der guten axialen Durchmischung wird eine Enthomogenisierung des Beladungsgutes wirksam vermieden. Es resultiert zudem eine verkürzte Aktivierungszeit und damit eine verkürzte Produktionsdauer, was zu Einsparungen hinsichtlich der Produktionskosten führt. Aufgrund der guten Durchmischung des Beladungsgutes können bei den erfindungsgemäßen Drehrohren größere Beladungsmengen, welche mehr als 30 % des Füllvolumens des Drehrohres betragen können, ohne Verschlechterung der Ausbeute realisiert werden, da - wie zuvor geschildert - durch die gute axiale Durchmischung ein gleichmäßiger Kontakt des Beladungsgutes mit der Umgebungsatmosphäre realisiert ist.

Zudem wird durch die außenseitige Verschweißung der Mischelemente ein leicht zu wartendes, wenig temperaturanfälliges System bereitgestellt, welches geeignet ist, sowohl des extrem korrosiven Bedingungen der Carbonisierungsphase als auch den Hochtemperaturbedingungen der Aktivierungsphase standzuhalten; die außenseitige Verschweißung der Mischelemente ermöglicht die Verwendung von Verschweißungsmaterialien, die für die Verschweißung optimal geeignet sind, aber für eine innenseitige Verschweißung nicht ohne weiteres Anwendung finden könnten, da sie den korrosiven Hochtemperaturbedingungen im Inneren des Drehrohrofens während des Betriebszustand nicht ohne weiteres auf Dauer standhalten würden.

Die außenseitige Anbringung des bzw. der Verstärkungselemente bewirkt, daß die mechanische Stabilität bzw. die Formstabilität des Drehrohres im Betriebszustand, insbesondere auch unter extremen Bedingungen, wie sie z. B. bei der Aktivkohleherstellung auftreten, beträchtlich verbessert wird. Auf diese Weise wird ein Drehrohr geschaffen, welches mechanischen Deformationen besser widerstehen kann und resistenter auch gegenüber starken Druckdifferenzen und Druckschwankungen ist und somit auch unter Betriebsbedingungen formstabil ist. Das erfindungsgemäße Drehrohr weist folglich eine verbesserte Lebensdauer mit verringerter Tendenz zur vorzeitigen Materialermüdung auf. Auch sind aufgrund dessen die Prozeßführung und Prozeßkontrolle erleichtert.

Weitere Vorteile, Ausgestaltungen, Abwandlungen, Variationen und Eigenschaften der vorliegenden Erfindung sind für den Fachmann beim Lesen der Beschreibung ohne weiteres ersichtlich und verständlich, ohne daß er hierbei den Rahmen der vorliegenden Erfindung verläßt.

## Patentansprüche

1. Drehrohr (1), insbesondere für einen Drehrohrofen zur Herstellung von Aktivkohle, mit einem Übergangsbereich (ÜB) von einem kleineren Innenquerschnitt (Q1) zu einem größeren Innenquerschnitt (Q2) des Drehrohre (1) und mit mehreren im Innenraum (2) des Drehrohres (1) angeordneten platten- und/oder schaufelförmigen Mischelementen (3) zur Durchmischung eines Beladungsgutes (4),
wobei die Mischelemente (3) zumindest im wesentlichen abschnittsweise zur Längsachse (LA) des Drehrohre (1) geneigt sind, wobei der Neigungswinkel (β) der Mischelemente (3) oder deren Abschnitte zur Längsachse (LA) des Drehrohres (1), bezogen auf deren zweidimensionale Projektionsebene, in Abhängigkeit von der Position der Mischelemente (3) entlang der Längsachse (LA) des Drehrohres (1) ausgebildet und/oder ausgewählt ist derart, daß die Mischelemente (3) im Bereich des kleineren Innenquerschnittes (Q1) des Übergangsbereiches (ÜB) einen geringeren Neigungswinkel (β) aufweisen als die in Richtung des größeren Innendurchmessers (Q2) des Übergangsbereiches (ÜB) angeordneten Mischelemente (3),
wobei die Mischelemente (3) im Übergangsbereich (ÜB) ausgebildet und/oder angeordnet sind derart, daß das Beladungsgut (4) im Betrieb von den Mischelementen (3) zum kleineren Innenquerschnitt (Q1) hin gefördert wird.

2. Drehrohr nach Anspruch 1, **dadurch gekennzeichnet, daß** der Übergangsbereich (ÜB) konus- und/oder kegelstumpfartig ausgebildet ist und/oder daß sich der Übergangsbereich (ÜB) bis zu 90 % über die Gesamtlänge (GL) des Drehrohres (1) erstreckt und/oder daß sich der Übergangsbereich über 10 bis 90 % der Gesamtlänge (GL) des Drehrohres (1) erstreckt und/oder daß der Übergangsbereich (ÜB) einen Steigungswinkel (α) der Mantelfläche des Übergangsbereiches (ÜB) zur Längsachse (LA) des Drehrohres (1), bezogen auf deren zweidimensionale Projektionsebene, im Bereich von 1 bis 15 ° aufweist.

3. Drehrohr nach Anspruch 1 oder 2, **dadurch gekennzeichnet, daß** die Mischelemente (3) vollständig zur Längsachse (LA) des Drehrohres (1) geneigt sind.

4. Drehrohr nach Anspruch 3, **dadurch gekennzeichnet, daß** der Neigungswinkel (β) im Bereich von 1 bis 45 ° liegt.

5. Drehrohr nach einem oder mehreren der vorangehenden Ansprüche, **dadurch gekennzeichnet, daß** die Mischelemente (3) Längen (L) im Bereich von 1 bis 500 mm aufweisen und/oder daß die Mischelemente (3) Befestigungsabschnitte (5) aufweisen.

6. Drehrohr nach einem oder mehreren der vorangehenden Ansprüche, **dadurch gekennzeichnet, daß** die Mischelemente (3) Schaufelabschnitte (6) aufweisen, wobei die Schaufelabschnitte (6) an deren freien Enden abgewinkelt sind.

7. Drehrohr nach einem oder mehreren der vorangehenden Ansprüche, **dadurch gekennzeichnet, daß** die Mischelemente (3) das Drehrohr (1) radial durchgreifen, wobei die Mischelemente (3) außenseitig mit dem Drehrohr (1) verschweißt sind und/oder wobei das Drehrohr (1) Durchbrechungen (7) zur Aufnahme der Befestigungsabschnitte (5) der Mischelemente (3) aufweist und die Befestigungsabschnitte (5) mit dem Drehrohr (1) über eine Schweißverbindung (10) außenseitig verschweißt sind.

8. Drehrohr nach Anspruch 7, **dadurch gekennzeichnet, daß** die Durchbrechungen (7) zur Aufnahme der Befestigungsabschnitte (5) der Mischelemente (3) schlitzartig ausgebildet sind und/oder daß die Befestigungsabschnitte (5) der Mischelemente (3) durch die Durchbrechungen (7) durchgesteckt sind.

9. Drehrohr nach einem der vorangehenden Ansprüche, **dadurch gekennzeichnet, daß** das Drehrohr (1) und/oder die Mischelemente (3) aus hochtemperatur- und korrosionsbeständigem Stahl bestehen.

10. Drehrohr nach einem oder mehreren der vorangehenden Ansprüche, **dadurch gekennzeichnet, daß** das Drehrohr (1) außenseitig mit mindestens einem Verstärkungselement (8) zur Stabilisierung des Drehrohres (1) im Betrieb versehen ist, wobei das Drehrohr (1) in seinem Querschnitt und/oder in seiner Längserstrekkung stabilisiert wird und/oder wobei sich das Verstärkungselement (8) peripher um das Drehrohr (1) erstreckt und/oder wobei das Verstärkungselement (8) koaxial zum Drehrohr (1) angeordnet ist.

11. Drehrohr nach Anspruch 10, **dadurch gekennzeichnet, daß** das Verstärkungselement (8) mit dem Drehrohr (1) über eine Schweißverbindung (9) verschweißt ist und/oder daß das Verstärkungselement (8) aus Metall besteht.

12. Drehrohr nach einem oder mehreren der vorangehenden Ansprüche, **dadurch gekennzeichnet, daß** das Drehrohr (1) Einlaß- und Auslaßeinrichtungen zum Einfuhren und Auslassen sowie Durchleiten von Gasen aufweist.

13. Drehrohrofen, insbesondere zur Herstellung von Aktivkohle, aufweisend ein Drehrohr (1) nach den Ansprüchen 1 bis 12.

14. Verfahren zur Herstellung von Aktivkohle unter Verwendung eines Drehrohres nach den Ansprüchen 1 bis 12 oder eines Drehrohrofens nach Anspruch 13.

15. Verfahren nach Anspruch 14, **dadurch gekennzeichnet, daß** die Herstellung der Aktivkohle durch Carbonisierung und nachfolgende Aktivierung kohlenstoffhaltiger Ausgangsmaterialien in dem Drehrohr oder dem Drehrohrofen erfolgt.

## Claims

1. Rotary tube (1), in particular for a rotary tubular kiln for producing activated carbon, comprising a transition region (< B) from a smaller internal cross section (Q1) to a larger internal cross section (Q2) of the rotary tube (1) and comprising a plurality of plate- and/or shovel-shaped mixing elements (3) arranged in the interior space (2) of the rotary tube (1) for intermixing a feedstock (4),
wherein the mixing elements (3) are inclined, at least substantially in sections, relative to the longitudinal axis (LA) of the rotary tube (1), wherein the inclination angle (β) of the mixing elements (3) or sections thereof relative to the longitudinal axis (LA) of the rotary tube (1), with respect to the two dimensional plane of projection thereof, is formed and/or selected according to the position of the mixing elements (3) along the longitudinal axis (LA) of the rotary tube (1) in such a way that the mixing elements (3) in the region of the smaller internal cross section (Q1) of the transition region (< B) have a smaller inclination angle (β) than the mixing elements (3) arranged in the direction of the larger internal diameter (Q2) of the transition region (< B),
wherein the mixing elements (3) are formed and/or arranged in the transition region (< B) in such a way that the feedstock (4) is conveyed during operation towards the smaller internal cross section (Q1) by the mixing elements (3),

2. Rotary tube according to Claim 1, **characterized in that** the transition region (< B) is of cone-like and/or frustoconical design and/or **in that** the transition region (< B) extends by up to 90% over the entire length (GL) of the rotary tube (1) and/or **in that** the transition region extends over 10 to 90% of the entire length (GL) of the rotary tube (1) and/or **in that** the transition region (< B) has an angle of slope (α) of the lateral surface of the transition region (< B) relative to the longitudinal axis (LA) of the rotary tube (1), with respect to the two-dimensional plane of projection thereof, within the range of 1 to 15°.

3. Rotary tube according to Claim 1 or 2, **characterized in that** the mixing elements (3) are fully inclined relative to the longitudinal axis (LA) of the rotary tube (1).

4. Rotary tube according to Claim 3, **characterized in that** the inclination angle (β) is within the range of 1 to 45°.

5. Rotary tube according to one or more of the preceding claims, **characterized in that** the mixing elements (3) have lengths (L) within the range of 1 to 500 mm and/or **in that** the mixing elements (3) have fastening sections (5).

6. Rotary tube according to one or more of the preceding claims, **characterized in that** the mixing elements (3) have shovel sections (6), the shovel sections (6) being angled at the free ends thereof.

7. Rotary tube according to one or more of the preceding claims, **characterized in that** the mixing elements (3) pass through the rotary tube (1) radially, wherein the mixing elements (3) are welded to the rotary tube (1) on the outside and/or wherein the rotary tube (1) has apertures (7) for receiving the fastening sections (5) of the mixing elements (3) and the fastening sections (5) are welded to the rotary tube (1) on the outside via a welded joint (10).

8. Rotary tube according to Claim 7, **characterized in that** the apertures (7) for receiving the fastening sections (5) of the mixing elements (3) are of slot-like design and/or **in that** the fastening sections (5) of the mixing elements (3) are put through the apertures (7).

9. Rotary tube according to one of the preceding claims, **characterized in that** the rotary tube (1) and/or the mixing elements (3) are made of high-temperature and corrosion-resistant steel.

10. Rotary tube according to one or more of the preceding claims, **characterized in that** the rotary tube (1) is provided on the outside with at least one reinforcing element (8) for stabilizing the rotary tube (1) during operation, wherein the rotary tube (1) is stabilized in its cross section and/or in its longitudinal extent and/or wherein the reinforcing element (8) extends peripherally around the rotary tube (1) and/or wherein the reinforcing element (8) is arranged coaxially to the rotary tube (1).

11. Rotary tube according to Claim 10, **characterized in that** the reinforcing element (8) is welded to the rotary tube (1) via a welded joint (9) and/or **in that** the reinforcing element (8) is made of metal.

12. Rotary tube according to one or more of the preceding claims, **characterized in that** the rotary tube (1) has inlet and outlet devices for introducing and discharging gases and for passing gases through it.

13. Rotary tubular kiln, in particular for producing activated carbon, having a rotary tube (1) according to Claims 1 to 12.

14. Method for producing activated carbon using a rotary tube according to Claims 1 to 12 or a rotary tubular kiln according to Claim 13.

15. Method according to Claim 14, **characterized in that** the activated carbon is produced by carbonization and subsequent activation of carbon-containing initial materials in the rotary tube or the rotary tubular kiln.

## Revendications

1. Tube rotatif (1), en particulier pour four tubulaire rotatif destiné à produire du charbon actif, le tube rotatif présentant une zone de transition (ÜB) entre une petite section transversale intérieure (Q1) et une grande section transversale intérieure (Q2) du tube rotatif (1) et plusieurs éléments de mélange (3) en forme de plaque et/ou en forme d'aube disposés dans l'espace intérieur (2) du tube rotatif (1) pour mélanger le produit chargé (4),
au moins essentiellement certaines parties des éléments de mélange (3) étant inclinées par rapport à l'axe longitudinal (LA) du tube rotatif (1), l'angle d'inclinaison (β) des éléments de mélange (3) ou de leurs parties par rapport à l'axe longitudinal (LA) du tube rotatif (1), rapporté sur leur plan bidimensionnel de projection, étant formé et/ou sélectionné en fonction de la position des éléments de mélange (3) le long de l'axe longitudinal (LA) du tube rotatif (1) de telle sorte que les éléments de mélange (3) disposés dans la zone de petite section transversale intérieure (Q1) de la zone de transition (ÜB) présentent un angle d'inclinaison (β) plus petit que les éléments de mélange (3) disposés en direction du grand diamètre intérieur (Q2) de la zone de transition (ÜB),
les éléments de mélange (3) étant configurés et/ou disposés dans la zone de transition (ÜB) de telle sorte que le produit chargé (4) soit en fonctionnement transporté par les éléments de mélange (3) en direction de la petite section transversale intérieure (Q1).

2. Tube rotatif selon la revendication 1, **caractérisé en ce que** la zone de transition (ÜB) a une configuration en cône et/ou en tronc de cône, **en ce que** la zone de transition (ÜB) s'étend sur jusque 90 % de la longueur totale (GL) du tube rotatif (1), **en ce que** la zone de transition s'étend sur 10 à 90 % de la longueur totale (GL) du tube rotatif (1) et/ou **en ce que** la zone de transition (ÜB) présente un angle de pente (α) de la surface d'enveloppe de la zone de transition (ÜB) par rapport à l'axe longitudinal (LA) du tube rotatif (1), rapporté sur son plan bidimensionnel de projection, compris dans la plage de 1 à 15°.

3. Tube rotatif selon les revendications 1 ou 2, **caractérisé en ce que** les éléments de mélange (3) sont entièrement inclinés par rapport à l'axe longitudinal (LA) du tube rotatif (1).

4. Tube rotatif selon la revendication 3, **caractérisé en ce que** l'angle d'inclinaison (β) est compris dans la plage de 1 à 45°,

5. Tube rotatif selon l'une ou plusieurs des revendications précédentes, **caractérisé en ce que** les éléments de mélange (3) ont une longueur (L) de l'ordre de 1 à 500 mm et/ou **en ce que** les éléments de mélange (3) présentent des parties de fixation (5).

6. Tube rotatif selon l'une ou plusieurs des revendications précédentes, **caractérisé en ce que** les éléments de mélange (3) présentent des parties (6) en aube, les parties (6) en aube étant coudées à leur extrémité libre.

7. Tube rotatif selon l'une ou plusieurs des revendications précédentes, **caractérisé en ce que** les éléments de mélange (3) traversent radialement le tube rotatif (1), les éléments de mélange (3) étant soudés du côté extérieur au tube rotatif (1) et/ou le tube rotatif (1) présentant des perforations (7) qui reprennent les parties de fixation (5) des éléments de mélange (3), les parties de fixation (5) étant soudées du côté extérieur au tube rotatif (1) par une liaison soudée (10).

8. Tube rotatif selon la revendication 7, **caractérisé en ce que** les perforations (7) sont configurées en fentes pour reprendre les parties de fixation (5) des éléments de mélange (3) et/ou **en ce que** les parties de fixation (5) des éléments de mélange (3) sont traversées par les perforations (7).

9. Tube rotatif selon l'une des revendications précédentes, **caractérisé en ce que** le tube rotatif (1) et/ou les éléments de mélange (3) sont constitués d'acier réfractaire et résistant à la corrosion,

10. Tube rotatif selon l'une ou plusieurs des revendications précédentes, **caractérisé en ce que** le tube rotatif (1) est doté sur son côté extérieur d'au moins un élément de renfort (8) qui stabilise le tube rotatif (1) en fonctionnement, la section transversale et/ou l'extension longitudinale du tube rotatif (1) étant stabilisées, l'élément de renfort (8) s'étendant à la périphérie du tube rotatif (1) et/ou l'élément de renfort (8) étant disposé coaxialement par rapport au tube rotatif (1).

11. Tube rotatif selon la revendication 10, **caractérisé en ce que** l'élément de renfort (8) est soudé sur le tube rotatif (1) par une liaison soudée (9) et/ou en ce que l'élément de renfort (8) est constitué de métal.

12. Tube rotatif selon l'une ou plusieurs des revendications précédentes, **caractérisé en ce que** le tube rotatif (1) présente des dispositifs d'entrée et de sortie qui permettent l'apport, l'extraction et le passage de gaz.

13. Four tubulaire rotatif, en particulier pour la production de charbon actif, présentant un tube rotatif (1) selon les revendications 1 à 12.

14. Procédé de production de charbon actif par recours à un tube rotatif selon les revendications 1 à 12 ou à un four tubulaire rotatif selon la revendication 13.

15. Procédé selon la revendication 14, **caractérisé en ce que** la production de charbon actif s'effectue par carbonisation et ensuite activation de matériaux de départ contenant du carbone dans le tube rotatif ou le four tubulaire rotatif.
